# EUROPÄISCHE PATENTSCHRIFT

(11) **EP 1 163 973 B1**
(45) Veröffentlichungstag und Bekanntmachung des Hinweises auf die Patenterteilung: **01.03.2006**
(21) Anmeldenummer: 01113913.6
(22) Anmeldetag: 07.06.2001
(51) Int. Cl.: B23Q 1/03, B23Q 1/52

(54) **Maschinentisch für eine Bearbeitungsmaschine**
Table for a machine tool
Table pour une machine d'usinage

(30) Priorität: 14.06.2000 DE 10028579
(43) Veröffentlichungstag der Anmeldung: 19.12.2001
(73) Patentinhaber: J. Schmalz GmbH, 72293 Glatten (DE)
(72) Erfinder: Göckel, Karl, 69254 Malsch (DE); Göckel, Martin, 69254 Malsch (DE)
(74) Vertreter: Dreiss, Fuhlendorf, Steimle & Becker

(56) Entgegenhaltungen:
- EP-A- 0 650 800
- DE-A- 4 027 895
- DE-A- 19 538 829

## Beschreibung

Die Erfindung betrifft einen Maschinentisch für eine Bearbeitungsmaschine mit den Merkmalen des Oberbegriffs des Anspruchs 1, wie z.B. aus der EP-A-650 800 bekannt.

Auf derartigen Maschinentischen ist es möglich, ein zu bearbeitendes Werkstück, z.B. aus Holz, Metall, Kunststoff oder Glas direkt zu befestigen, um es mit der Bearbeitungsmaschine, beispielsweise einer Oberfräse oder dergleichen zu bearbeiten. Daneben ist es auch möglich, Arbeitshilfsmittel am Maschinentisch anzubringen, auf denen dann das zu bearbeitende Werkstück aufgenommen wird, oder die ihrerseits zum Bearbeiten des Werkstücks dienen. Zum Befestigen des Werkstücks oder eines Arbeitshilfsmittels sind an der oberen Seite des Maschinentischs geeignete Mittel vorgesehen, die mit dem Werkstück oder dem Arbeitshilfsmittel zusammenwirken und so ein Spannen desselben zulassen. Derartige Mittel können beispielsweise eine Raster-Nuten-Struktur umfassen, die in die Tischoberfläche eingebracht ist und die mit einer Unterdruckquelle verbunden ist, so dass ein Unterdruck in die Struktur eingebracht werden kann. Ober in die Nuten eingelegte Dichtschnüre kann so ein abgegrenzter Unterdruckraum geschaffen werden, auf den das Werkstück gelegt wird und so angesaugt werden kann. Daneben ist es auch möglich, anstelle einer Raster-Nuten-Struktur mehrere an der oberen Seite mündende Unterdruckkanäle vorzusehen, die ebenfalls mit einer Unterdruckquelle verbunden sind und über geeignete Verschlusselemente abgedichtet werden können. Soll ein Werkstück oder ein Arbeitshilfsmittel gespannt werden, werden einfach die benötigten Öffnungen aufgemacht, so dass der Unterdruck an das Werkstück/Arbeitshilfsmittel gelegt werden kann. Weiterhin sind auch Magnetflächen bekannt, auf denen Arbeitshilfsmittel, die einen metallischen Halteabschnitt aufweisen, aufgesetzt und so gehalten werden können. Dies sind nur einige bekannte Spanntechniken, die eingesetzt werden können, um Werkstücke oder Arbeitshilfsmittel an einen Maschinentisch haltern zu können.

Die Aufstellung ist nicht abschließend, dem Fachmann sind natürlich noch weitere entsprechende Spanntechniken bekannt.

Jeder Maschinentisch ist für eine bestimmte Spanntechnik ausgelegt bzw. konstruiert, das heißt, der Arbeiter kann an dem einer Bearbeitungsmaschine zugeordneten Tisch nur eine Spanntechnik nutzen. Damit geht einher, dass bei einem Wechsel der zu bearbeitenden Werkstücke beispielsweise im Rahmen der Serienfertigung eine für das Werkstück A gewählte Einrichtung des Maschinentischs, auf dem beispielsweise entsprechende Arbeitshilfsmittel in Form von Vakuumsaugelementen aufgesetzt sind, die in ihrer Anordnung entsprechend der Form des Werkstückes A platziert sind, geändert werden muss, um den Tisch entsprechend der Form und den Erfordernissen des nachfolgend zu bearbeitenden Werkstücks B einzurichten. Dies ist aufwendig und zeitraubend.

Aus der EP 0 650 800 A2 ist ein Maschinentisch für eine Bearbeitungsmaschine zum Bearbeiten von Holz bekannt, mit dem wenigstens ein zu bearbeitendes Werkstück oder wenigstens ein Arbeitshilfsmittel aufgenommen werden kann, und welches wenigstens ein um eine Achse drehbar gelagertes Tischelement aufweist, das wenigstens zwei durch Drehen des Tischelements in eine Arbeitsposition bringbare Seiten aufweist, an denen das Werkstück und/oder an das Arbeitshilfsmittel befestigbar ist.

Aus der DE 195 38 829 A1 ist eine Arbeitsfläche für Werkzeugmaschinen bekannt. Diese Arbeitsfläche umfasst eine Vielzahl von Arbeitstischen, die entlang einer horizontalen Längsachse der genannten Arbeitsfläche verstellbar sind und ein Mittel umfassen, dass das Festhalten eines in Bearbeitung befindlichen Werkstücks an der Arbeitsfläche realisiert.

Aus der DE 40 27 895 ist eine Werkzeugmaschine bekannt, die eine vorzugsweise in drei Achsrichtungen verfahrbare Spindel zur Werkzeugaufnahme aufweist. Bei einem Spanntisch für ein zu bearbeitendes Werkstück ist der Spanntisch um eine quer zur Rotationsachse der Spindel verlaufende Schwenkachse verschwenkbar. Der Spanntisch weist dabei beidseitig der Schwenkachse jeweils eine Spannfläche für ein Werkstück auf.

Der Erfindung liegt das Problem zugrunde, einen flexibleren und variabel einsetzbaren Maschinentisch anzugeben.

Dieses Problem wird mit einem Maschinentisch gelöst, der die Merkmale des Anspruchs 1 aufweist.

Die erfindungsgemäße Drehbarkeit des Tischelements, das wenigstens zwei Arbeitsseiten, an denen ein Werkstück oder ein Arbeitshilfsmittel befestigt werden kann, aufweist, ermöglicht ein variables und sehr flexibles Arbeiten. An jeder Tischseite sind entsprechende Mittel zum Halten des Werkstücks oder des Arbeitshilfsmittels gleich welcher Art vorgesehen. An den jeweiligen Seiten können gleichartige Haltemittel oder unterschiedlich arbeitende Haltemittel vorgesehen sein. Für den Arbeiter besteht der beachtliche Vorteil, dass er beispielsweise an der ersten Seite den Tisch entsprechend einem zu bearbeitenden Werkstück A einer ersten Form einrichten kann; die zweite oder jede weitere Seite kann entsprechend den Erfordernissen eines weiteren zu bearbeitenden Werkstücks B, C etc. einrichten. Im Falle eines Werkstückwechsels muss er lediglich das Tischelement so drehen, dass die jeweils eingerichtete Arbeitsseite nach oben zeigt. Sind beispielsweise bei einem Tischelement mit zwei Arbeitsseiten an jeder Seite gleichartige Haltemittel in Form einer Raster-Nuten-Struktur, über die ein Unterdruck an das Werkstück gelegt werden kann, vorgesehen, so ist es möglich, die Dichtschnüre an einer ersten Seite gemäß der Form des Werkstücks A einzusetzen und die entsprechenden außerhalb der von den Dichtschnüren umgebenden Fläche mündenden Vakuumkanalöffnungen zu verschließen. An der gegenüberliegenden Seite kann oder können die Dichtschnüre entsprechend der Form eines Werkstücks B platziert werden. Im Falle eines Werkstückwechsels ist ein sofortiger Wechsel der Tischseite möglich, ohne dass irgendwelche weiteren Einrichtungen vorzunehmen wären.

Sind demgegenüber an den Seiten unterschiedliche Spanntechniken realisiert, also verschiedenartige Mittel, so ist es möglich, an der ersten Seite ein Werkstück A zu spannen. Ist nachfolgend ein Werkstück B zu spannen, welches mit der an der ersten Seite vorgesehenen.Spanntechnik nicht gehaltert werden kann, kann durch Drehen des Tischelements die zweite Seite mit der anders gearteten Spanntechnik nach oben gedreht werden, an oder mittels welcher das andere Werkstück B gespannt werden kann. Entsprechendes gilt natürlich betreffend die Anbringung von Arbeitshilfsmitteln. In diesem Fall kann der Maschinentisch vom Arbeiter multifunktional genutzt werden, denn es ist ihm möglich, verschiedenartige Werkstücke mit ein und demselben Maschinentisch unter Verwendung verschiedener Spanntechniken bzw. verschiedener Haltemittel spannen zu können und diese Werkstücke mit ein und derselben Bearbeitungsmaschine bearbeiten zu können. Hierfür sind bis dato jeweils unterschiedliche Maschinentisch-Bearbeitungsmaschinen-Kombinationen erforderlich gewesen, da di.e erfindungsgemäße Variabilität der Spanntechniken an einem Maschinentisch nicht vorhanden war.

Insgesamt bietet der erfindungsgemäße Maschinentisch dem Arbeiter die Möglichkeit für ein äußerst rasches und variables Arbeiten.

Erfindungsgemäß ist vorgesehen, dass das Tischelement konsolenartig ausgebildet ist, wobei an einem Tischgestell mehrere konsolenartige und parallel zueinander angeordnete Tischelemente vorgesehen sind. Bei dieser Erfindungsausgestaltung wird die Tisch- oder Spannebene mittels der mehreren Tischelemente gebildet, die jeweils mehrere Seiten aufweisen, die in eine entsprechende Arbeitsposition gebracht werden können. Ein Werkstück kann an nur einem Tischelement oder übergreifend über zwei oder mehrere Tischelemente an diesen gespannt werden, entweder direkt oder unter Zwischenschaltung entsprechender Arbeitshilfsmittel wie beispielsweise Vakuumsauger oder dergleichen. Da jedes Tischelement drehbar gelagert ist, ist auf diese Weise ein Wenden sehr platzsparend möglich, wobei gleichzeitig die Möglichkeit zur Bildung sehr großer Tischebenen gegeben ist.

Gemäß einer ersten Erfindungsausgestaltung kann das Tischelement als großflächige Tischplatte ausgebildet sein. Bei dieser Erfindungsalternative kommt nur ein an einem entsprechenden Tischgestell gehaltertes Tischelement zum Einsatz, welches um eine Achse - die bei einer üblichen rechteckförmigen Ausführung der Tischplatte bevorzugt in dessen Längsrichtung verläuft - verschwenkt werden kann.

Dabei kann jedes konsolenartige Tischelement im Querschnitt im Wesentlichen dreieckig ausgebildet sein und drei-Seiten aufweisen, an denen entsprechende Haltemittel vorgesehen sein können. In diesem Fall kann der Arbeiter also zwischen drei unterschiedlichen Arbeitsseiten wählen. Alternativ zur dreieckigen Ausgestaltung kann jedes Tischelement im Querschnitt im Wesentlichen auch viereckig ausgebildet und vier Seiten aufweisen. Auch Tischelemente mit mehr als vier Seiten sind denkbar.

Zwei-, drei- bzw. viereckige Tischelemente sind insbesondere dann von Vorteil, wenn, wie erfindungsgemäß vorgesehen sein kann, die konsolenartigen Tischelemente verschiebbar an dem Tischgestell gelagert sind. Zum einen bietet die verschiebbare Lagerung dass jedes Tischelement beliebig nah bezüglich eines anderen positioniert werden kann, um auch kleinere Werkstücke, die unter Verwendung zweier nebeneinander angeordneter Tischelemente zu spannen sind, problemlos spannen zu können. Daneben besteht die Möglichkeit bei Verwendung von Tischelementen mit zwei Seiten, die also im Wesentlichen flach und rechteckig ausgebildet sind, bei Verwendung von dreieckigen Tischelementen und bei Verwendung von viereckigen Tischelementen, diese unmittelbar aneinander angrenzend anzuordnen, so dass sich eine quasi geschlossene Tischfläche bilden lässt, die ein vollständiges Aufliegen eines Werkstücks ermöglicht. Die Tischelemente selbst können manuell verschiebbar sein, zusätzlich oder alternativ dazu kann auch eine automatische Verschiebbarkeit realisiert sein. Für das automatische Verschieben kommen zweckmäßigerweise motorische oder pneumatische Antriebe zum Einsatz. Das automatische Verschieben wird zweckmäßigerweise über eine zentrale Steuerungseinrichtung gesteuert. In der jeweiligen Position sind die Tischelemente über geeignete Arretier- oder Feststellmechanismen arretierbar. Ein verwendbarer Verschiebemechanismus ist beispielsweise in der Patentanmeldung DE 100 23 916 beschrieben, auf die ausdrücklich Bezug genommen wird und deren Offenbarungsgehalt in die vorliegende Anmeldung einbezogen wird.

Auch das Drehen des oder der Tischelemente kann manuell und/oder automatisch erfolgen, wozu ebenfalls entsprechende motorische oder pneumatische Antriebe vorgesehen sein können, die über eine gemeinsame zentrale Steuerungseinrichtung angesteuert werden. In der jeweiligen Endposition werden die Tischelemente über geeignete Arretier- oder Feststellmittel arretiert. Dabei können mehrere Tischelemente gemeinsam mittels eines gemeinsamen motorischen oder pneumatischen Antriebs drehbar sein, alternativ dazu können die einzelnen Tischelemente auch separat mittels eines eigenen, jedem Tischelement zugeordneten Antrieb gedreht werden.

Wie bereits beschrieben können an den Seiten gleichartig und/oder verschiedenartig wirkende, am Werkstück oder dem Arbeitshilfsmittel angreifende oder- mit diesen zusammenwirkende Mittel zum Haltern des Werkstücks und/oder des Arbeitshilfsmittels vorgesehen sein. Sind mehr als zwei Seiten am jeweiligen Tischelement vorgesehen, also bei einer drei-, vier- oder mehreckigen Ausbildung, so können selbstverständlich an zwei oder mehr Seiten gleichartig wirkende und an den anderen entsprechend verschiedenartig wirkende Haltemittel vorgesehen sein, die konkrete Ausgestaltung bzw. Verteilung ist hierbei beliebig.

Dabei können die Mittel unmittelbar an der jeweiligen Seite ausgebildet oder dort integriert sein, das heißt, die Mittel sind an der jeweiligen Seite fest angebracht. Zur Ermöglichung einer größtmöglichen Flexibilität hinsichtlich der an einem Tischelement vorgesehenen Mittel hat es sich aber als besonders vorteilhaft erwiesen, wenn an der jeweiligen Seite wenigstens ein die jeweiligen Mittel aufweisendes oder bildendes Aufsetzelement befestigt oder befestigbar vorgesehen ist. Gemäß dieser Erfindungsausgestaltung ist jedes Tischelement insoweit modular aufgebaut, als es quasi aus einem Grundträger besteht, an dem an den jeweiligen Seiten ein oder mehrere plattenförmige Aufsetzelemente befestigt werden können. Diese Aufsetzelemente weisen auf oder bilden die jeweiligen Haltemittel, das heißt, mit jedem Aufsatzelement wird eine spezifische Spanntechnik realisiert bzw. am Grundträger angeordnet. Dies ermöglicht es, im Bedarfsfall eine gewünschte, noch nicht am jeweiligen Tischelement vorhandene Spanntechnik nachträglich dort im Austausch mit einer anderen vorzusehen, wozu lediglich die Aufsetzelemente ausgetauscht werden müssen. Der Maschinentisch ist damit noch variabler und kann vom Arbeiter noch flexibler eingesetzt werden.

Dabei können die Mittel gemäß einer ersten Erfindungsausgestaltung eines Raster-Nuten-Struktur umfassen, über die ein Unterdruck an das aufgesetzte Werkstück oder das Arbeitshilfsmittel gelegt werden kann. Diese Raster-Nuten-Struktur kann entweder direkt in die jeweilige Seite des Tischelements eingefräst sein, alternativ hierzu kann diese Struktur an einen plattenförmigen Aufsatzelement ausgebildet sein, welches seinerseits an den Träger des Tischelements befestigt, bevorzugt angeschraubt wird. Eine weitere Ausführungsform der Haltemittel sieht diese in Form einer Nutenstruktur, insbesondere einer T-Nuten-Struktur vor, die mit entsprechenden in sie einführbaren und am Werkstück oder dem Arbeitshilfsmittel ausgebildeten Gegenstücken zum Haltern desselben zusammenwirken. Auch diese bevorzugt T-förmig gestalteten Nuten können unmittelbar am Tischelement in die Oberfläche eingebracht sein, alternativ können sie an einer Aufsetzplatte ausgebildet sein. An einer solchen Hattestruktur werden bevorzugt Arbeitshilfsmittel beispielsweise in Form separater Spannpratzen, eines Reitstocks, eines Anschlags oder dergleichen gehaltert und verspannt. Ist eine solche Struktur beispielsweise an einem viereckigen Trägerelement rechtwinklig zu einer ein Werkstück über Unterdruck spannenden Struktur vorgesehen, so kann beispielsweise die Unterdruck-Spannstruktur in die horizontale Arbeitsposition gebracht werden und an der dazu vertikal verlaufenden T-Nuten-Struktur entsprechende Anschläge befestigt werden. Das heißt, entsprechende Strukturen können generell auch gemeinsam genutzt werden.

Nach einer weiteren Ausführungsform können die Mittel längslaufende Schienen, auf denen wenigstens ein das Werkstück oder das Arbeitshilfsmittel tragender Wagen verschiebbar und arretierbar ist, umfassen. Dieser Wagen kann beispielsweise eine Aufnahmeplattform für ein Arbeitshilfsmittel tragen, beispielsweise für Vakuum-Spannhülsen, die einerseits über Unterdruck an der ebenen Aufnahmeplattform befestigt werden können und andererseits oberseitig über Unterdruck ein Werkstück spannen können. Ein Unterdruck-Spannmittel, das hierfür verwendet werden kann, ist beispielsweise in der deutschen Patentanmeldung DE 197 50 656 beschrieben, auf die ausführlich Bezug genommen wird und deren Offenbarungsgehalt in die Anmeldung einbezogen wird. Handelt es sich um ein modular aufgebautes Tischelement, so sind die Schienen an einer entsprechenden Aufsetzplatte vorgesehen, auf die dann der oder die Wagen gesetzt werden können.

Nach einer weiteren die Haltemittel betreffende Alternative können diese eine Vielzahl von über Ventilelemente schließbare Ansaugöffnungen umfassen, über die ein Unterdruck an das aufgesetzte Werkstück oder das Arbeitshilfsmittel gelegt werden kann. Auch diese Ansaugöffnungen mit den integrierten Ventilelementen können direkt an dem Tischelement oder an einer geeigneten Aufsetzplatte vorgesehen sein. Ein Beispiel für die Ausgestaltung einer solchen Halteeinrichtung ist beispielsweise in der deutschen Patentanmeldung DE 100 23 323 beschrieben, auf die ausführlich Bezug genommen wird und deren Offenbarungsgehalt in diese Anmeldung einbezogen wird. Neben den in dieser Anmeldung beschriebenen mechanischen Ventilelementen sind aber auch Elektroventile verwendbar, die über eine zentrale Steuerungseinrichtung angesteuert werden. Wichtig hierbei ist sicher zu stellen, dass die Verbindungsleitungen zwischen der Steuerung und den Elektroventilen derart geführt sind, dass diese beim Drehen eines Tischelements nicht abgedreht werden können.

Schließlich sieht eine weitere Alternative der Haltemittel vor, dass diese eine Magnetplatte, insbesondere eine über einen Elektromagneten magnetisierbare Platte umfassen. Über diese Mittel können entsprechende Arbeitshilfsmittel - natürlich auch zu bearbeitende Werkstücke, die eine entsprechende Metalleinlage oder dergleichen aufweisen - an der Platte gehaltert werden.

Eine weitere Erfindungsalternative sieht vor, dass die Mittel eine Metallplatte mit einer Vielzahl oberseitig mündender Kanalöffnungen mit zugeordneten magnetischen Verschlussscheiben umfassen, wobei über die Kanalöffnungen ein Unterdruck an das aufgesetzte Werkstück oder das Arbeitshilfsmittel gelegt werden kann. In diesem Fall werden die Kanalöffnungen über die beschriebenen Verschlussscheiben geschlossen und im Bedarfsfall geöffnet, so dass der Arbeiter jede beliebige Ansaugkonfiguration durch einfaches Wegnehmen oder Aufsetzen der Verschlussscheiben ausbilden kann.

Eine weitere Erfindungsalternative sieht vor, dass die Mittel eine Holz- oder Kunststoffplatte, in die Nägel, Schrauben oder sonstige Befestigungselemente eingebracht werden können, umfassen.

Das jeweilige Aufsetzelement ist zweckmäßigerweise wie beschrieben plattenförmig ausgebildet, um längs des Tischelements eine möglichst große Aufnahmefläche für das Werkstück/Arbeitshilfsmittel zu realisieren. Jedes Aufsetzelement wird über geeignete Befestigungsmittel an der jeweiligen Seite des Tischelements befestigt, wozu zweckmäßigerweise Befestigungsschrauben eingesetzt werden, die in entsprechende Gewindeaufnahmen an dem Grundträger eingeschraubt werden. Jedes Aufsetzelement bildet also quasi einen Adapter für eine bestimmte Befestigungs- oder Spanntechnik.

Zum Zuführen des Unterdrucks zu den jeweiligen mit Unterdruck arbeitenden Haltemitteln ist zweckmäßigerweise innerhalb des Tischelements wenigstens ein Unterdruckkanal vorgesehen, über den an wenigstens einer Seite diejenigen Mittel, über die Unterdruck an das Werkstück oder das Arbeitshilfsmittel geführt kann, mit Unterdruck versorgbar sind. An diesem Unterdruckkanal wird eine externe Unterdruckquelle angeschlossen, der Kanal selbst ist so geführt, dass überall dort, wo der Unterdruck zum Werkstück hin abgegeben werden soll, entsprechende Öffnungen vorgesehen sind. Ist das Tischelement modular aufgebaut, so ist es zweckmäßig, wenn an der jeweiligen Seite mehrere mit dem integrierten Unterdruckkanal kommunizierende Kanalbohrungen münden, von denen zumindest ein Teil mit entsprechenden Kanalbohrungen des jeweiligen Aufsetzelements verbindbar sind. Die Kanalbohrungen sind derart angeordnet, dass sie beim Aufsetzen eines plattenförmigen Aufsetzelements automatisch mit entsprechenden dort ausgebildeten Bohrungen verbunden werden, um den Unterdruck an das Aufsetzelement zu übertragen. Um das Aufsetzelement an die am Grundträger des Tisches vorgesehenen Kanalbohrungen problemlos ankoppeln zu können, kann an der Unterseite des Aufsetzelements auch ein entsprechendes Kanalnetz bestehend aus einer Vielzahl von Kanalnuten vorgesehen sein. Überdeckt eine solche Nut eine entsprechende trägerseitige Kanalbohrung wird automatisch das gesamte Kanalnetz mit Unterdruck beaufschlagt. Die trägerseitig vorgesehenen Kanalbohrungen werden, wenn ein Aufsetzelement mit einer Haltetechnik, die nicht mit Unterdruck arbeitet, aufgesetzt wird, einfach von der Unterseite des Aufsetzelements abgedichtet. Anstelle des Kanalnetzes kann auch ein großräumiger Unterdruckhohlraum an der Unterseite jedes Aufsetzelements vorgesehen sein, das heißt, die Unterseite des Aufsetzelements ist etwas von der Oberseite des Grundträgers beabstandet, das Aufsetzelement selbst sitzt jedoch randseitig völlig dicht auf dem Träger auf.

Zweckmäßig ist es, wenn unterhalb jeder Seite des Tischelements wenigstens ein Unterdruckkanal vorgesehen ist, der über Kanalbohrungen an der jeweiligen Seite mündet, um die Möglichkeit zu schaffen, an jeder beliebigen Seite eine Aufsetzplatte mit Unterdruck-Haltemitteln anbringen zu können.

Nach einer besonders vorteilhaften Erfindungsausgestaltung ist vorgesehen, dass ein einer Seite zugeordneter Unterdruckkanal nur in und automatisch bei Erreichen der Position, in der die jeweilige Seite in ihrer Arbeitsposition steht, mit einer externen Unterdruckquelle verbindbar ist. Wird gemäß dieser Ausgestaltung eine Seite in ihre Arbeitsposition gedreht, so ist automatisch die Kopplung eines der Seite zugeordneten Unterdruckkanals mit einer externen Unterdruckquelle realisiert.

Weiterhin können erfindungsgemäß ein oder mehrere Arretierelemente zum Arretieren des Tischelements in der jeweiligen Position vorgesehen sein. Hier sind Arretierbolzen, die mechanisch oder elektrisch gesteuert in entsprechende Rastausnehmungen eingreifen, denkbar.

Im Hinblick auf die vorher beschriebene automatische Kopplung eines Unterdruckkanals mit einer externen Unterdruckquelle ist es besonders zweckmäßig, wenn wenigstens ein Arretierelement gleichzeitig als Verbindungselement zwischen dem Unterdruckkanal und der am Arretierelement anschließbaren Unterdruckquelle ausgebildet ist. Gemäß dieser Erfindungsausgestaltung greift ein entsprechend ausgebildetes Arretierelement, wenn es in die Raststellung schnappt, an einem Unterdruckkanal an und verbindet diesen gleichzeitig mit der Unterdruckquelle. Diesem Arretierelement kommt also eine arretierende sowie eine kanalverbindende Funktion zu.

Da verschiedene Arbeitshilfsmittel über Pressluft betätigt werden, ist es zweckmäßig, wenigstens einen im Tischelement integrierten und an wenigstens einer Seite mündenden Pressluftkanal vorzusehen, der mit einer externen Pressluftquelle verbindbar ist. Dieser Pressluftkanal kann auch dann angezapft werden, wenn die Seite, an der er austritt, nicht in der oberen Arbeitsposition steht. In diesem Fall wird die Pressluft über einen dort anschließbaren Pressluftschlauch an das an der in Arbeitsposition befindlichen Seite befestigte Arbeitshilfsmittel, z.B. eine Spannpratze geführt.

Zweckmäßig ist es, wenn an einer Seite des Tischelements eine den oder die Unterdruckkanäle und ggf. den oder die Pressluftkanäle schließende Platte vorgesehen ist, an der geeignete Verbindungsmittel zum Verbinden eines Unterdruckkanals oder eines Pressluftkanals mit der jeweiligen Quelle und/oder einem Arretierelement vorgesehen sind. Das Tischelement bzw. sein Grundträger selbst ist bevorzugt nach Art eines Strangpressprofils gepresst und mithin an beiden Seiten offen, wo er über entsprechende Verschlussplatte verschlossen und die entsprechenden Kanäle abgedichtet werden. An einer dieser Platten sind zweckmäßigerweise sämtlichen erforderlichen Anschlüsse vorgesehen.

Nach einer weiteren zweckmäßigen Erfindungsausgestaltung ist vorgesehen, dass das oder jedes insbesondere konsolenartige Tischelement aus mehreren hintereinander angeordneten Tischelementabschnitten mit jeweils mindestens zwei Seiten besteht, die separat um eine gemeinsame Achse drehbar und untereinander arretierbar sind. Die separat dreh- und arretierbaren Tischelementabschnitte können wiederum beliebig unterschiedliche Spanntechniken an den jeweiligen Seiten tragen, so dass sich innerhalb einer Tischelementebene unterschiedliche Spanntechniken an unterschiedlichen Positionen längs des Tischelements in Arbeitsposition drehen lassen, was die Flexibilität noch weiter vergrößert. Die Tischelementabschnitte können manuell und/oder maschinell drehbar sein. Zum Arretieren dienen zweckmäßige Rastkupplungen, das heißt, die Abschnitte verrasten untereinander, wenn sie in der jeweiligen Endstellung sind, in welcher die jeweiligen Seiten der Abschnitte parallel zueinander verlaufen.

Auch hier sollte jeder Tischelementabschnitt wenigstens einen Unterdruck- und/oder wenigstens einen Pressluftkanal aufweisen, wobei zumindest die Kanäle zweier nebeneinander angeordneter Tischelementabschnitte, die in der oberen Arbeitsposition sind, miteinander koppelbar sind, so dass über einen zentralen Anschluss wie vorstehend bereits beschrieben sämtliche Betriebsmittel auch zwischen den Tischelementabschnitten durchgeschleift werden können. Wenngleich es ausreichend ist, dass jeweils die den in Arbeitsposition befindlichen Seiten befindlichen Kanäle miteinander koppelbar sind, ist es zweckmäßig, wenn auch die Kanäle zweier nebeneinander angeordneter Tischelementabschnitte, die im Bereich einer nicht in der oberen Arbeitsposition befindlichen Seite verlaufen miteinander koppelbar sind, um beispielsweise die Pressluft von einer Seite, die nicht nach oben gedreht ist, abzunehmen und sie einem an der Oberseite befestigten Arbeitshilfsmittel zuzuführen.

Im Hinblick auf eine möglichst einfache Kopplung der Kanäle ist es zweckmäßig, wenn diese automatisch bei Erreichen einer Stellung erfolgt, in der die Seiten zweier Tischelementabschnitte parallel zueinander liegen. Dies kann über geeignete Rastkupplungen erfolgen, die ein entsprechendes Verbinden der jeweiligen Kanäle ermöglichen.

Nach einer weiteren zweckmäßigen Erfindungsausgestaltung kann vorgesehen sein, dass wenigstens ein Tischelementabschnitt aus dem Verbund entfernbar ist, so dass insgesamt ein modulares System realisiert ist, in dem die einzelnen Tischelementabschnitte wahlweise eingesetzt oder entfernt werden können. Dabei können die Tischelementabschnitte auf einem zentralen, in der Drehachse verlaufenden Träger lösbar aufsetzbar sein, beispielsweise geschraubt, gesteckt, geklemmt oder durch Magnetkraft gehaltert. Nach Befestigen des jeweiligen Abschnitts kann er durch Antreiben des Trägers mitgedreht werden.

Eine zweckmäßige Erfindungsalternative sieht demgegenüber vor, dass der wenigstens eine Tischelementabschnitt vollständig aus dem Verbund entnehmbar ist, so dass zwischen zwei Tischelementabschnitte eine Lücke entsteht, in die ein Drittgegenstand einsetzbar ist. Bei dieser Erfindungsausgestaltung kann zwischen zwei Tischelementabschnitte ein Drittgegenstand, beispielsweise ein zu bearbeitendes Werkstück gespannt werden und rotierend angetrieben werden, so dass es möglich ist, das Werkstück durch Drehen, Drechseln etc. zu bearbeiten. Der Antrieb des Werkstücks erfolgt dabei über eines der äußeren Tischelemente, das am anderen Ende befindliche Tischelement bildet die mitlaufende Gegenseite.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine Prinzipskizze einer ersten erfindungsgemäßen Ausführungsform eines Maschinentisches,
- Fig. 2: eine Aufsicht auf den Tisch aus Fig. 1 als Prinzipskizze,
- Fig. 3: eine Prinzipskizze einer zweiten Ausführungsform eines erfindungsgemäßen Maschinentisches,
- Fig. 4: eine Prinzipskizze einer dritten Ausführungsform eines erfindungsgemäßen Maschinentisches,
- Fig. 5: eine Prinzipdarstellung als Schnittansicht eines Tischelements mit viereckigen Querschnitt,
- Fig. 6: eine Prinzipskizze im Schnitt des Tischelements aus Fig. 5 zur Darstellung der Verbindung der jeweiligen Kanäle mit entsprechenden Versorgungsquellen,
- Fig. 7: eine Prinzipdarstellung eines Tischelements mit daran befestigten Arbeitshilfsmitteln und einem Werkstück,
- Fig. 8: eine Prinzipdarstellung eines aus mehreren Tischelementabschnitten bestehenden Tischelements, und
- Fig. 9: eine- Prinzipdarstellung eines modularen Tischelements- einer weiteren Ausführungsform.

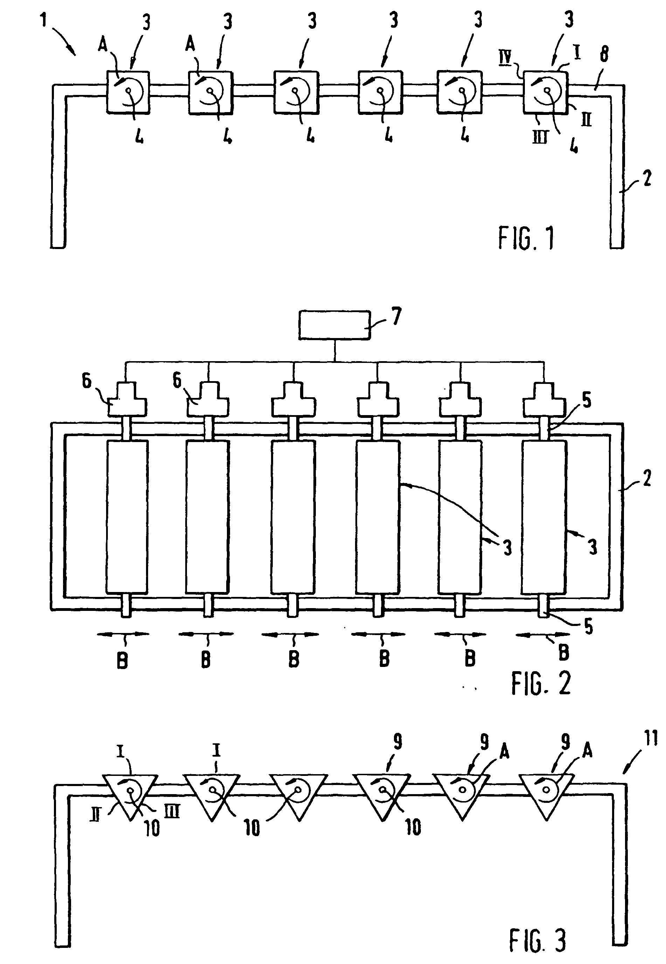

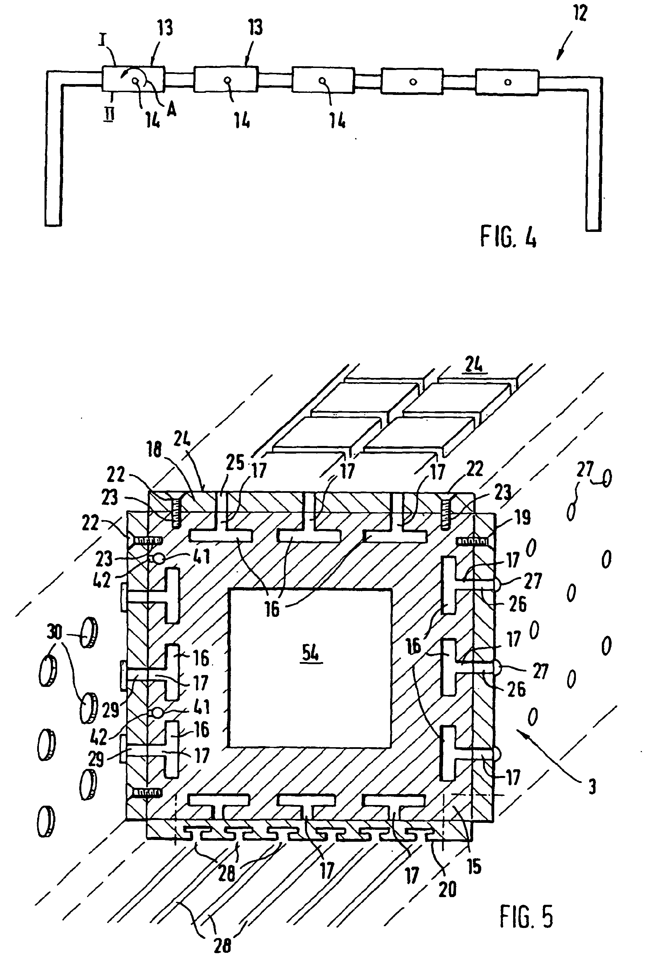

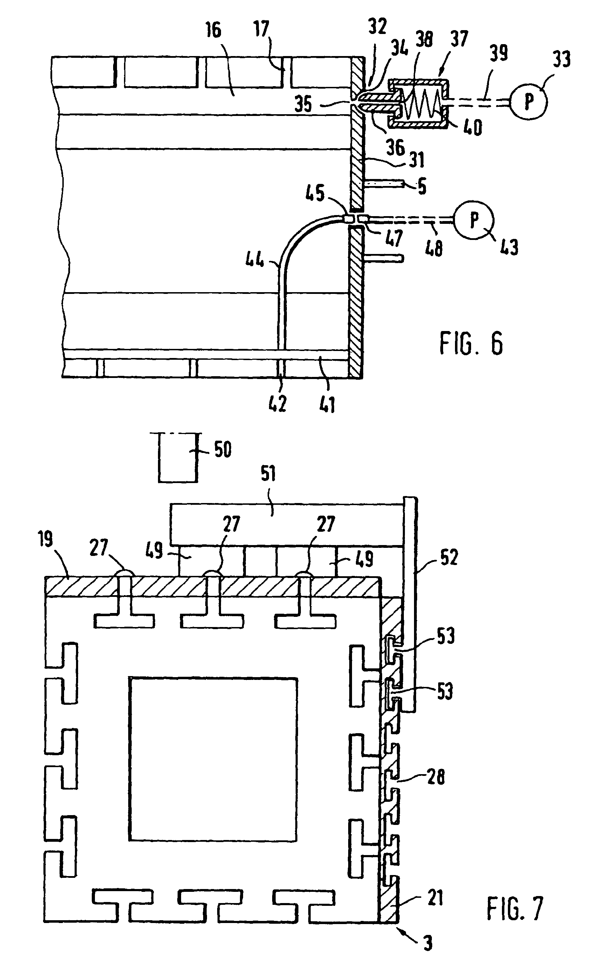

Fig. 1 zeigt einen erfindungsgemäßen Maschinentisch 1 einer ersten Ausführungsform als Prinzipskizze. Der Maschinentisch 1 besteht aus einem Tischgestell 2, an dem mehrere Tischelemente 3 befestigt sind. Diese Tischelemente sind, wie in Fig. 1 gezeigt, um die jeweilige Drehachse 4 drehbar gelagert, wie durch den jeweiligen Pfeil A angedeutet ist. Zum Verdrehen der über geeignete Lagerzapfen 5 am Tischgestell 2 drehbar gelagerten Tischelemente 3 sind im gezeigten Beispiel entsprechende Motoren 6 vorgesehen, die über entsprechende Verbindungsleitungen mit einer zentralen Steuerungseinrichtung 7 verbunden sind. Jedes Tischelement weist vier Seiten I, II, III, IV auf, an denen entsprechende Haltemittel zum Halten eines Werkstücks und/oder Arbeitshilfsmittels vorhanden sind, worauf bezüglich Fig. 5 und 7 noch eingegangen wird.

Mittels der Motoren 6 ist es nun möglich, jedes Tischelement 3 so zu drehen, dass eine beliebige gewünschte Seite I - IV oben liegt und quasi die Tischfläche bildet.

Darüber hinaus sind alle Tischelemente 3 längs des Horizontalträgers 8 des Tischgestells 2 verschiebbar, wie in Fig. 2 durch die Pfeile B angedeutet. Auch das horizontale Verschieben erfolgt zweckmäßigerweise über die Steuerungseinrichtung 7 gesteuert automatisch, wobei beispielsweise eine Verschiebetechnik wie in der Patentanmeldung DE 100 23 916 beschrieben eingesetzt werden kann. Dies ermöglicht es, die Tischelemente 3 beliebig nahe oder entfernt voneinander beabstanden zu können, um so eine beliebige Tischoberseitenkonfiguration zu bilden.

Ersichtlich lässt es die in den Fig. 1 und 2 gezeigte viereckige Ausbildung der Tischelemente 3 zu, dass diese unmittelbar einander anliegend positioniert werden können, so dass quasi eine geschlossene Tischoberseite gebildet werden kann. Entsprechendes ist auch mit Tischelementen 9 mit wie in Fig. 3 gezeigt dreieckigem Querschnitt möglich. Auch diese sind um die jeweiligen Drehachsen 10 drehbar, wie durch die Pfeile A angedeutet. Die in Fig. 3 gezeigten Tischelemente 9 weisen drei Seiten I, II, III auf, an denen entsprechende Haltemittel vorgesehen sind. Ein gemeinsames Verdrehen um die jeweilige Achse 10 ist hier aufgrund der dreieckigen Konfiguration auch bei einer unmittelbar benachbarten Anordnung möglich.

Schließlich zeigt Fig. 4 eine weitere Ausführungsform eines Maschinentischs 12, bei dem die Tischelemente 13 eine im Wesentlichen flache, rechteckige Konfiguration aufweisen und nur zwei Seiten I, II besitzen, an denen entsprechende Haltemittel vorgesehen sind. Auch diese Tischelemente 13 sind um entsprechende Drehachsen 14 verdrehbar. Bei diesem Maschinentisch wie auch dem Maschinentisch 11 gemäß Fig. 3 kommen zum Verdrehen ebenfalls entsprechende Motoren zum Einsatz, auch ist eine horizontale Verschiebung möglich.

Fig. 5 zeigt einen Schnitt durch ein viereckiges Tischelement 3. Dieses Tischelement 3 besteht aus einem Grundträger 15. Jeder Längsseite des Grundträgers 15 zugeordnet sind mehrere Vakuumkanäle 16, die sich von einem Ende des Trägers 15 zum anderen erstrecken. Die Vakuumkanäle 16 münden über Kanalbohrungen 17 an der jeweiligen Seite. In Fig. 5 sind jeweils als Prinzipdarstellungen entsprechende Aufsichten auf die Oberseiten der jeweiligen Aufsetzplatten mit dargestellt.

Auf jeder Seite des Grundträgers 15 ist ein plattenförmiges Aufsetzelement 18, 19, 20, 21 mittels geeigneter Befestigungsschrauben 22, die in entsprechende Gewindebohrungen 23 an der jeweiligen Seite des Grundträgers eingreifen, aufgesetzt. Im gezeigten Beispiel weist jedes Aufsetzelement 18 - 21 unterschiedliche Mittel zum Halten eines Werkstücks/Arbeitshilfsmittels auf. An der Oberseite des Aufsetzelements 18 ist eine Raster-Nuten-Struktur 24 eingefräst, wobei diese Nuten- oder Kanalstruktur über entsprechende Kanalbohrungen 25, die beim Aufsetzen des Aufsetzelements mit den entsprechenden Kanalbohrungen 17 der Unterdruckkanäle 16 verbunden werden, ausgebildet. Die obere, gestrichelte Teildarstellung zeigt eine Aufsicht auf diese Raster-Nuten-Struktur 24 sowie die Kanalbohrungen, die das Beaufschlagen der Raster-Nuten-Struktur 24 mit über die Unterdruckkanäle 16 zugeführtem Unterdruck ermöglichen. Unter Verwendung von nicht näher gezeigten Dichtschnüren, die in die entsprechenden Nuten eingelegt werden, ist es möglich, abgegrenzte Ansaugabschnitte zu bilden, an denen ein flächiges Werkstück befestigt werden kann.

An der rechtwinklig dazu stehenden rechten Seite des Grundträgers 15 ist ebenfalls über geeignete Befestigungsschrauben ein ebenfalls plattenförmiges Aufsetzelement 19 angeschraubt, an dem ebenfalls eine Reihe von Kanalbohrungen 26 vorgesehen sind, die nach dem Aufsetzen des Aufsetzelements 19 in gleicher Weise mit den Kanalbohrungen 17 der Unterdruckkanäle 16 verbunden werden. An bzw. im Bereich der Oberseite des Aufsetzelements 19 sind die Kanalbohrungen 26 über geeignete Ventilelemente 27 (beispielsweise der Art, wie sie in der Patentanmeldung DE 100 23 323 beschrieben sind) geschlossen. Wird ein Werkstück oder Aufsetzelement auf die Oberfläche gestellt, so wird wenigstens ein Ventilelement 27 betätigt, so dass der Unterdruckkanal geöffnet wird und der Unterdruck an das Werkstück/Arbeitshilfsmittel geführt werden kann. Im unbetätigten Zustand sind die Ventilelemente 27 geschlossen.

An der Unterseite des Grundträgers 15 ist ebenfalls mittels geeigneter Befestigungsschrauben 22 ein Aufsetzelement 20 befestigt, an dem mehrere T-Nuten 28, die in Längsrichtung des Tischelements 3 verlaufen, vorgesehen sind. In diese T-Nuten 28 können entsprechende T-förmige Gegenstücke, die beispielsweise an einem Arbeitshilfsmittel in Form eines Spannpratzens oder dergleichen vorgesehen sind, eingeführt werden, worüber das Arbeitshilfsmittel in den Nuten entsprechend verspannt werden kann.

Schließlich ist an der vierten, linken Seite des Grundträgers 15 ein viertes Aufsetzelement 21 in Form einer Metallplatte mit Befestigungsschrauben 22 lösbar angeschraubt. Auch die Metallplatte weist mehrere Kanalbohrungen 29 auf, die im aufgesetztem Zustand mit den Kanalbohrungen 17 der jeweiligen Unterdruckkanäle 16 verbunden sind. Die an der Oberseite der Metallplatte 21 mündenden Kanalbohrungen 29 werden dort über entsprechende magnetische Verschlussscheiben 30 verschlossen. Soll nun mittels Unterdruck ein Werkstück gespannt werden, sei es direkt auf der Plattenoberseite oder unter Zwischenschaltung eines Unterdruckansaugelements, werden einfach die zum Spannen erforderlichen Verschlussscheiben entfernt, so dass-die Öffnungen frei liegen.

Wie aus der Beschreibung ersichtlich ist, ist das Tischelement 3 insoweit modular aufgebaut, bestehend aus dem standardisierten Grundträger 15, der an allen Seiten entsprechende Unterdruckkanäle und entsprechende seitlich mündende Kanalbohrungen besitzt, sowie den modularen Aufsetzplatten. Jedes Aufsetzelement weist Mittel einer unterschiedlichen Spanntechnik auf, so dass es der an der Maschine arbeitenden Person möglich ist, zum Spannen des Werkstücks die geeignete Spanntechnik zu wählen. Daneben ist es aufgrund des modularen Aufbaus auch möglich, im Bedarfsfall das eine oder andere Aufsetzelement abzuschrauben und gegen ein anderes auszutauschen, so dass größtmögliche Variabilität gegeben ist. Je nach Bedarf wird die gewünschte Seite nach oben gedreht, wie in den Fig. 1 und 2 dargestellt ist. Entsprechendes gilt betreffend der Maschinentischausführungen der Fig. 3 und 4.

Festzuhalten ist, dass anstelle der separaten Kanalbohrungen innerhalb der Aufsetzelemente 18 - 21 auch ein entsprechendes Kanalnetz an der jeweiligen Unterseite eines Aufsetzelements vorgesehen ist, in das der Unterdruck über eine oder mehrere Kanalbohrungen 17 eingeführt wird. Auch die Ausbildung eines großräumigen Hohlraums ist denkbar, jedes Aufsetzelement würde dann nur randseitig und dicht auf der jeweiligen Seite des Grundträgers 15 aufsitzen. Hier ist jede Möglichkeit denkbar, die es ermöglicht, den Unterdruck über die Unterdruckkanäle 16 an das entsprechende Aufsetzelement zu führen. Handelt es sich um ein Aufsatzelement, dessen Haltemittel nicht mit Unterdruck arbeiten, so ist - siehe das Aufsatzelement 20 - dessen Unterseite geschlossen, sie liegt dicht auf den Kanalbohrungen 17 auf.

Dies ist insoweit wichtig um sicherzustellen, dass das Unterdrucksystem dann geschlossen ist, wenn kein Unterdruck benötigt wird. Denn wie Fig. 6 zeigt ist bei dem erfindungsgemäßen Maschinentisch ein automatischer Koppelmechanismus zum Verbinden des bzw. der Unterdruckkanäle 16, die der jeweiligen in Arbeitsposition befindlichen Seite zugeordnet sind, mit einer Unterdruckquelle realisiert. Im gezeigten Beispiel gemäß Fig. 6 ist die Stirnseite mit einer Abschlussplatte 31 dicht abgeschlossen (entsprechendes gilt für die Gegenseite, die über die Platte 54 abgeschlossen und abgedichtet ist, siehe Fig. 5). An der Platte 31 sind entsprechende Verbindungsmittel 32 vorgesehen, über die ein Vakuumkanal 16 mit einer Unterdruckquelle 33 automatisch verbunden werden kann. Diese Verbindungsmittel umfassen eine im gezeigten Beispiel halbkugelförmige Ausnehmung 34 mit einer Durchbrechung 35, die in einen Unterdruckkanal 16 mündet. Es ist darauf hinzuweisen, dass selbstverständlich alle Unterdruckkanäle 16, die einer Seite zugeordnet sind, zweckmäßigerweise untereinander verbunden sind, damit lediglich eine Anschlussstelle für die Unterdruckquelle 33 vorgesehen werden muss.

In die Ausnehmung 34 rastet ein Rastelement 36 eines Arretierelements 37 ein, über welches zum einen die Arretierung des Tischelements 3 in der Arbeitsposition gewährleistet wird. Zum anderen erfolgt hierüber aber auch die automatische Kopplung mit der Unterdruckquelle 33. Zu diesem Zweck weist das Rastelement 36 eine Durchbrechung 38 auf, über die der über eine geeignete Verbindungsleitung 39 beaufschlagte Unterdruck an das über eine Druckfeder 40 gelagerte Rastelement 38 gegeben werden kann. Rastet also das Rastelement 36 in der Ausnehmung 34 ein, ist der zugeordnete Unterdruckkanal 16 automatisch mit der Unterdruckquelle 33 verbunden. Wird das Tischelement weitergedreht so wird das Rastelement 36 aus der Ausnehmung 34 herausgedrückt, wodurch ein entsprechender Mechanismus ausgelöst werden kann, dass das quasi ein Ventilelement darstellende Rastelement 36 geschlossen wird und der Unterdruckkreislauf geschlossen ist. Erst bei Einrasten in die nächste, der benachbarten Seite zugeordnete Ausnehmung wird dieser wieder geöffnet. Für den Fall, dass ein Aufsetzelement aufgeschraubt ist, das nicht mit Unterdruck arbeitende Haltemittel aufweist, sind die Kanalbohrungen 17 durch die Unterseite des Aufsetzelements geschlossen, so dass trotz Rasteingriffs der Unterdruckkreislauf auch in diesem Fall geschlossen ist.

Fig. 6 zeigt ferner die Möglichkeit, wie ein an einer anderen Seite geführter Pressluftkanal 41 (in Fig. 5 sind zwei solche Pressluftkanäle 41 vorgesehen, die über entsprechende Kanalbohrungen 42 an der jeweiligen Seite des Grundträgers 15 münden) mit einer Externen und Pressluftquelle 43 verbunden ist. Im Inneren des insoweit hohlen Grundträgers 15 ist eine Pressluftleitung 44 vorgesehen, die sich von einem in der Drehachse liegenden Anschlussteil 45 zu einem entsprechenden Anschluss am Pressluftkanal 41 erstreckt. Über ein entsprechendes Anschlussmittel 47 ist über einen weiteren Pressluftschlauch 48 die Pressluftquelle 43 angekoppelt. Mittels der Anschlussmittel 45, 47 ist eine Drehverbindung realisiert, die ein beliebiges Drehen des Tischelements ermöglicht, ohne dass die Verbindung zur Pressluftquelle 43 gelöst wird. Das heißt, die innere Pressluftleitung 44 dreht sich mit, während die äußere Pressluftleitung 48 unbewegt bleibt.

Schließlich zeigt Fig. 7 eine exemplarische Einsatzmöglichkeit. Bei dem dort gezeigten Tischelement 3 ist an der oberen Seite ein Aufsetzelement 19 mit oberseitigen Ventilelementen 27 und an der rechten Seite ein Aufsetzelement 21 mit T-Nuten 28 festgeschraubt. Die beiden anderen Seiten sind im gezeigten Beispiel nicht mit Aufsetzelementen belegt. Auf das Aufsetzelement 27 sind im gezeigten Beispiel zwei Unterdrucksaugelemente 49 aufgesetzt. Deren Unterseiten betätigen jeweils ein Ventilelement 27, so dass die Verbindung zum jeweiligen Unterdruckkanal 16 geöffnet wird. Auf dem Unterdruckansaugelement 49 ist ein mittels eines Werkzeugs 50 zu bearbeitendes Werkstück 51 aufgesetzt und durch den Unterdruck festgespannt.

Am Aufsetzelement 21 ist ein Anschlag 52, an dessen einer Seite entsprechende T-förmige Gegenstücke 53 ausgebildet sind, befestigt. Die Gegenstücke 53 greifen in zwei T-Nuten 28 ein und werden dort nach Positionieren des Anschlags über die Länge des Tischelements verspannt. An diesen Anschlag 52 kann das Werkstück 51 herangeschoben werden, so dass es zu Bearbeitungszwecken exakt positioniert werden kann. Hierdurch soll die Zusammenwirkung der unterschiedlichen Spanntechniken dargestellt werden.

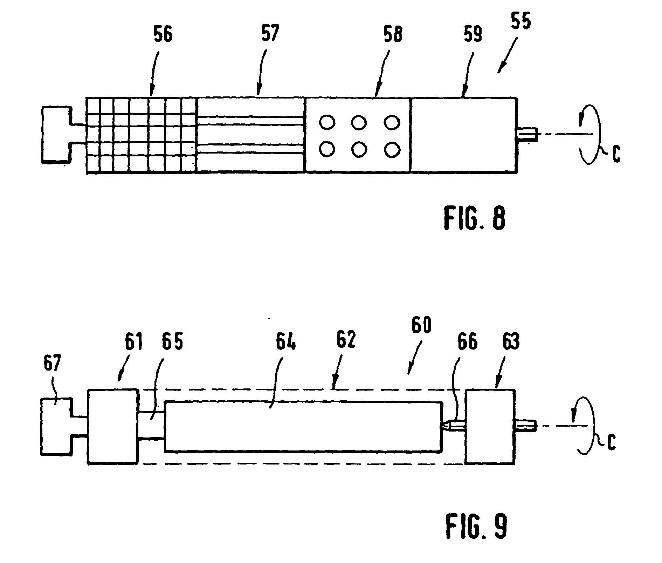

Fig. 8 zeigt in einer Prinzipdarstellung ein Tischelement 55, welches Teil einer der in den Fig. 1 bis 4 gezeigten Maschinentischmodifikationen sein kann. Dieses Tischelement 55 besteht aus vier Tischelementabschnitten 56, 57, 58, 59, die alle um die gemeinsame Achse (siehe Pfeil C) jeweils separat drehbar sind. Jeder der Tischelementabschnitte 56 - 59 besitzt eine entsprechende Anzahl an Seiten, an denen unterschiedliche Spanntechniken vorgesehen sind. Der Aufbau eines Tischelements entspricht vorzugsweise dem der vorher beschriebenen Ausführungsformen. Dieser Aufbau mit den separat drehbaren Tischelementabschnitten ermöglicht es, unterschiedliche Spanntechniken in eine Arbeitsebene zu drehen. Im gezeigten Beispiel sind auf jedem der Tischelementabschnitte 56 - 59 im Rahmen der Skizze unterschiedliche Spanntechniken dargestellt, beim Abschnitt 56 eine Raster-Nuten-Struktur, beim Abschnitt 57 eine T-Nut-Struktur, beim Abschnitt 58 eine Magnetplatte mit entfernbaren Abschlussdeckeln, und beim Abschnitt 59 eine ebene Holz- oder Kunststofffläche, in die beispielsweise Nägel getrieben werden können. Diese können beispielsweise mittels geeigneter Aufsetzplatten auf einem nicht gezeigten Grundträgerabschnitt eines Tischelementabschnittes realisiert sein.

Die Tischelementabschnitte können über einen gemeinsamen Antrieb, jedoch separat gedreht werden, alternativ besteht natürlich auch die Möglichkeit, die einzelnen Abschnitte lediglich manuell drehen zu können. Die im Inneren jedes der Abschnitte 56 - 59 verlaufenden Unterdruck- und/oder Pressluftkanäle werden untereinander verbunden, so dass sich bei Anschluss einer Unterdruckquelle beispielsweise an den rechten Abschnitt 59 der Unterdruck automatisch durch alle Abschnitte 56 - 59 durchschleifen lässt. Entsprechendes gilt für den oder die Pressluftkanäle. Bevorzugt ist die Ausgestaltung so wie bezüglich der Fig. 6 beschrieben, wonach lediglich die in der oberen Arbeitsposition befindlichen Unterdruckkanäle mit der Unterdruckquelle koppelbar sind. Zum Durchschleifen zwischen den einzelnen Abschnitten bietet sich eine entsprechende Kanalkupplung an, wie sie ebenfalls bezüglich Fig. 6 beschrieben ist. Selbstverständlich ist der Fachmann hier insoweit frei, solange sichergestellt ist, dass die Kanäle bei Erreichen einer Stellung, in der die Seiten zweier benachbarter Abschnitte parallel zueinander verlaufen, automatisch miteinander gekoppelt werden.

Fig. 8 zeigt schließlich ein weiteres Tischelement 60, das Teil eines Maschinentisches nach den Fig. 1 - 4 sein kann, und welches ebenfalls aus drei Tischelementabschnitten 61, 62, 63 besteht. Hier ist jedoch das Tischelement 62 aus dem Verbund entnehmbar, es ist im Vorliegenden nur gestrichelt gezeichnet. Zwischen die beiden Abschnitte 61 und 63 ist im gezeigten Beispiel ein Werkstück 64 gespannt, welches linksseitig auf einem entsprechenden Halte- oder Mitnahmeabschnitt 65 und rechtsseitig auf einen Dorn 66 gehaltert ist. Über den Antrieb 67 kann dieses Werkstück 64 gedreht werden, so dass es beispielsweise durch Drechseln oder Drehen bearbeitet werden kann.

Festzuhalten ist, dass die gezeigten Ausführungsbeispiele keinesfalls beschränkend sind. Vielmehr können beliebige unterschiedliche Aufsetzelemente, die auch Spanntechniken bzw. Haltemittel aufweisen, die in den Figuren nicht beschrieben sind, dem Fachmann aber bekannt sind, aufgesetzt werden. Die Verteilung ist dabei beliebig und wird vom Fachmann gemäß den Anforderungen gewählt.

## Patentansprüche

1. Maschinentisch für eine Bearbeitungsmaschine zum Aufnehmen wenigstens eines zu bearbeitenden Werkstücks oder wenigstens eines Arbeitshilfsmittels, mit wenigstens einem um eine Achse drehbar gelagerten Tischelement (3, 9, 13), das wenigstens zwei durch Drehen des Tischelements in eine Arbeitsposition bringbare Seiten aufweist, an denen das Werkstück und/oder das Arbeitshilfsmittel halterbar ist, **dadurch gekennzeichnet, dass** das Tischelement (3, 9, 13) konsolenartig ausgebildet ist, wobei an einem Tischgestell (2) mehrere konsolenartige und parallel zueinander angeordnete Tischelemente (3, 9, 13) vorgesehen sind.

2. Maschinentisch nach Anspruch 1, **dadurch gekennzeichnet, dass** das Tischelement als großflächige Tischplatte ausgebildet ist.

3. Maschinentisch nach Anspruch 1 oder 2, **dadurch gekennzeichnet, dass** jedes konsolenartige Tischelement (9) im Querschnitt im Wesentlichen dreieckig ausgebildet ist und drei Seiten (I, II, III) aufweist.

4. Maschinentisch nach Anspruch 1 oder 2, **dadurch gekennzeichnet, dass** jedes konsolenartige Tischelement (3) im Querschnitt im Wesentlichen viereckig ausgebildet ist und vier Seiten (I, II, III, IV) aufweist.

5. Maschinentisch nach einem der vorhergehenden Ansprüche, **dadurch gekennzeichnet, dass** die konsolenartigen Tischelemente (3, 9, 13) verschiebbar an dem Tischgestell (2) gelagert sind.

6. Maschinentisch nach Anspruch 5, **dadurch gekennzeichnet, dass** die Tischelemente (3, 9, 13) derart nebeneinander positionierbar sind, dass sich eine im Wesentlichen ebene, geschlossene Tischfläche ergibt.

7. Maschinentisch nach Anspruch 6, **dadurch gekennzeichnet, dass** die Tischelemente (3, 9, 13) manuell und/oder automatisch, insbesondere motorisch oder pneumatisch verschiebbar sind.

8. Maschinentisch nach einem der vorhergehenden Ansprüche, **dadurch gekennzeichnet, dass** das oder die Tischelemente (3, 9, 13) manuell und/oder automatisch, insbesondere motorisch oder pneumatisch drehbar sind.

9. Maschinentisch nach Anspruch 8, **dadurch gekennzeichnet, dass** mehrere Tischelemente (3, 9, 13) gemeinsam mittels eines gemeinsamen motorischen oder pneumatischen Antriebs oder separat mittels separater motorischer oder pneumatischer Antriebe (6) drehbar sind.

10. Maschinentisch nach einem der vorhergehenden Ansprüche, **dadurch gekennzeichnet, dass** an den Seiten (I, 11, 111, IV) gleichartig und/oder verschiedenartig wirkende, am Werkstück oder dem Arbeitshilfsmittel angreifende oder mit diesem zusammenwirkende Mittel zum Haltern des Werkstücks und/oder des Arbeitshilfsmittels vorgesehen sind.

11. Maschinentisch nach Anspruch 10, **dadurch gekennzeichnet, dass** die Mittel unmittelbar an der jeweiligen Seite ausgebildet oder dort integriert sind, oder dass an der jeweiligen Seite wenigstens ein die jeweiligen Mittel auf weisendes oder bildendes Aufsetzelement (18, 19, 20, 21) befestigt oder befestigbar ist.

12. Maschinentisch nach Anspruch 11, **dadurch gekennzeichnet, dass** die Mittel eine Raster-Nuten-Struktur (24) umfassen, über die ein Unterdruck an das aufgesetzte Werkstück oder das Arbeitshilfsmittel gelegt werden kann.

13. Maschinentisch nach Anspruch 11 oder 12, **dadurch gekennzeichnet, dass** die Mittel eine Nutenstruktur (28), insbesondere T-Nuten umfassen, die mit entsprechenden in sie einführbaren und am Werkstück oder dem Arbeitshilfsmittel ausgebildeten Gegenstücken zum Halten desselben zusammenwirken.

14. Maschinentisch nach einem der Ansprüche 11 bis 13, **dadurch gekennzeichnet, dass** die Mittel längslaufende Schienen, auf denen wenigstens ein das Werkstück oder das Arbeitshilfsmittel tragender Wagen verschiebbar ist, umfassen.

15. Maschinentisch nach einem der Ansprüche 11 bis 14, **dadurch gekennzeichnet, dass** die Mittel eine Vielzahl von über Ventilelemente (27) schließbare Ansaugöffnungen (26) umfassen, über die ein Unterdruck an das aufgesetzte Werkstück.oder das Arbeitshilfsmittel gelegt werden kann.

16. Maschinentisch nach einem der Ansprüche 11 bis 15, **dadurch gekennzeichnet, dass** die Mittel eine Magnetplatte, insbesondere eine über einen Elektromagneten magnetisierbare Magnetplatte umfassen.

17. Maschinentisch nach einem der Ansprüche 11 bis 16, **dadurch gekennzeichnet, dass** die Mittel eine Metallplatte (21) mit einer Vielzahl oberseitig mündender Kanalöffnungen (29) mit zugeordneten magnetischen Verschlussscheiben (30) umfassen, über die ein Unterdruck an das aufgesetzte Werkstück oder das Arbeitshilfsmittel gelegt werden kann.

18. Maschinentisch nach einem der Ansprüche 11 bis 17, **dadurch gekennzeichnet, dass** die Mittel eine- Holz- oder Kunststoffplatte, in die Nägel, Schrauben oder sonstige Befestigungselemente eingebracht werden können, umfassen.

19. Maschinentisch nach einem der Ansprüche 11 bis 18, **dadurch gekennzeichnet, dass** das jeweilige Aufsetzelement (18, 19, 20, 21) plattenförmig ausgebildet und über geeignete Befestigungsmittel (22) an der jeweiligen Seite des Tischelements (3, 9, 13) befestigbar, insbesondere anschraubbar ist.

20. Maschinentisch nach einem der vorhergehenden Ansprüche, **dadurch gekennzeichnet, dass** innerhalb des Tischelements (3, 9, 13) wenigstens ein Unterdruckkanal (16) vorgesehen ist, über den an wenigstens einer Seite Mittel, über die Unterdruck an das Werkstück oder das Arbeitshilfsmittel geführt werden kann, mit Unterdruck versorgbar sind.

21. Maschinentisch nach Anspruch 20, **dadurch gekennzeichnet, dass** an der jeweiligen Seite mehrere mit dem integrierten Unterdruckkanal (16) kommunizierende Kanalbohrungen (17) münden, von denen zumindest ein Teil mit entsprechenden Kanalbohrungen (25, 26, 29) oder -nuten oder einem Unterdruckhohlraum des jeweiligen Aufsetzelements (18, 19, 21) verbindbar sind.

22. Maschinentisch nach Anspruch 20 oder 21, **dadurch gekennzeichnet, dass** unterhalb jeder Seite (I, II, III, IV) des Tischelements (3, 9, 13) wenigstens ein Unterdruckkanal (16) vorgesehen ist, der über Kanalbohrungen (17) an der jeweiligen Seite (I, II, III, IV) mündet.

23. Maschinentisch nach einem der Ansprüche 20 bis 22, **dadurch gekennzeichnet, dass** ein einer Seite zugeordneter Unterdruckkanal (16) nur in und automatisch bei Erreichen der Position, in der die jeweilige Seite in ihrer Arbeitsposition steht, mit einer externen Unterdruckquelle (33) verbindbar ist.

24. Maschinentisch nach einem der vorhergehenden Ansprüche, **dadurch gekennzeichnet, dass** ein oder mehrere Arretierelemente (36) zum Arretieren des Tischelements (3, 9, 13) in der jeweiligen Arbeitsposition vorgesehen sind.

25. Maschinentisch nach Anspruch 23 und 24, **dadurch gekennzeichnet, dass** wenigstens ein Arretierelement (36) gleichzeitig als Verbindungselement zwischen dem Unterdruckkanal (16) und der am Arretierelement (36) anschließbaren Unterdruckquelle (33) ausgebildet ist.

26. Maschinentisch nach einem der vorhergehenden Ansprüche, **dadurch gekennzeichnet, dass** wenigstens ein im Tischelement (3, 9, 13) integrierter und an wenigstens einer Seite mündender Pressluftkanal (41) vorgesehen ist, der mit einer externen Pressluftquelle (43) verbindbar ist.

27. Maschinentisch nach einem der vorhergehenden Ansprüche, **dadurch gekennzeichnet, dass** an einer Stirnseite des Tischelements (3, 9, 13) eine den oder die Unterdruckkanäle (16) und gegebenenfalls den oder die Pressluftkanäle (41) schließende Platte (31) vorgesehen ist, an der geeignete Verbindungsmittel (32, 45, 47) zum Verbinden eines Unterdruckkanals (16) oder eines Pressluftkanals (41) mit der jeweiligen Quelle (33, 43) und/oder einem Arretierelement (36) vorgesehen sind.

28. Maschinentisch nach einem der Ansprüche 11 bis 26, **dadurch gekennzeichnet, dass** das Tischelement (3, 9, 13) einen gegebenenfalls mit dem oder den integrierten Unterdruck- und/oder Pressluftkanälen (16, 41) versehenen standardisierten Grundträger (15) aufweist, an dessen Seiten die Aufsetzelemente (18, 19, 20, 21) befestigbar sind.

29. Maschinentisch nach einem der vorhergehenden Ansprüche, **dadurch gekennzeichnet, dass** das oder jedes insbesondere konsolenartige Tischelement (55, 60) aus mehreren hintereinander angeordneten Tischelementabschnitten (56, 57, 58, 59, 61, 62, 63) mit jeweils mindestens zwei Seiten besteht, die separat um eine gemeinsame Achse (C) drehbar und untereinander arretierbar sind.

30. Maschinentisch nach Anspruch 29, **dadurch gekennzeichnet, dass** die Tischelementabschnitte (55, 60) manuell und/oder maschinell drehbar sind.

31. Maschinentisch nach Anspruch 29 oder 30, **dadurch gekennzeichnet, dass** jeder Tischelementabschnitt (56, 57, 58, 59, 61, 62, 63) wenigstens einen Unterdruck- und/oder wenigstens einen Pressluftkanal aufweist, wobei zumindest die Kanäle zweier nebeneinander angeordneter Tischelementabschnitte, die in der oberen Arbeitsposition sind, miteinander koppelbar sind.

32. Maschinentisch nach Anspruch 31, **dadurch gekennzeichnet, dass** auch die Kanäle zweier nebeneinander angeordneten Tischelementabschnitte (56, 57, 58, 59, 61, 62, 63), die im Bereich einer nicht in der oberen Arbeitsposition befindlichen Seite verlaufen miteinander koppelbar sind.

33. Maschinentisch nach Anspruch 31 oder 32, **dadurch gekennzeichnet, dass** die Kopplung automatisch bei Erreichen einer Stellung erfolgt, in der die Seiten zweier Tischelementabschnitte (56, 57, 58, 59, 61, 62, 63) parallel zueinander liegen.

34. Maschinentisch nach einem der Ansprüche 29 bis 33, **dadurch gekennzeichnet, dass** wenigstens ein Tischelementabschnitt (62) aus dem Verbund entfernbar ist.

35. Maschinentisch nach Anspruch 34, **dadurch gekennzeichnet, dass** die Tischelementabschnitte (56, 57, 58, 59) auf einem zentralen, in der Drehachse verlaufenden Träger lösbar aufsetzbar sind.

36. Maschinentisch nach Anspruch 34, **dadurch gekennzeichnet, dass** der wenigstens eine Tischelementabschnitt (62) vollständig aus dem Verbund entnehmbar ist, so dass zwischen zwei Tischelementabschnitten (61, 63) eine Lücke entsteht, in die ein Drittgegenstand einsetzbar ist.

## Claims

1. A machine table for a processing machine for supporting at least one workpiece to be processed or at least one work accessory, comprising at least one table element (3, 9, 13) mounted for rotation about an axis, having at least two sides, each of said at least two sides being movable into a working position upon rotation of said table element, said workpiece and/ or said work accessory being mountable to said sides, **characterized in that** said table element (3, 9, 13) being constructed in the form of a console and wherein a plurality of said console like and parallel arranged to each other table elements (3, 9, 13) are arranged at a table frame (2).

2. The machine table of claim 1, **characterized in that** said table element is constructed as a table top having a large area.

3. The machine table of claim 1 or 2, **characterized in that** each of said console like table element (9) has basically a triangular cross section and has three sides (I, II, III).

4. The machine table of claim 1 or 2, **characterized in that** each of said console like table element (3) has basically a square cross section and has four sides (I, II, III, IV).

5. The machine table of one of the preceding claims, **characterized in that** said console like table elements (3, 9, 13) are mounted displaceably on said table frame (2).

6. The machine table of claim 5, **characterized in that** said table elements (3, 9, 13) can be positioned next to one another to thereby form a basically flat, closed tabletop.

7. The machine fable of claim 6, **characterized in that** said table elements (3, 9 13) are displaceable manually and/or automatically, in particular motor driven or pneumatically.

8. The machine table of one of the preceding claims, **characterized in that** said one or the plurality of table elements (3, 9, 13) is rotatable manually and/or automatically, in particular motor driven or pneumatically.

9. The machine table of claim 8, **characterized in that** a plurality of table elements (3, 9, 13) being rotatable jointly by a common motor drive and pneumatic drive or separately by separate motor drives and pneumatic drives (6).

10. The machine table of one of the preceding claims, **characterized in that** means for holding said workpiece and/or said work accessory are provided at the sides (I, II, III, IV) which work similar and/or different and which affect or act together with the workpiece or the work accessory.

11. The machine table of claim 10, **characterized in that** said means are formed or integrated at the respective side or that an attaching means (18, 19, 20, 21) is mounted or mountable at the respective side showing or forming the particular means.

12. The machine table of claim 10, **characterized in that** said means comprise a grid-groove structure (24) over which a vacuum can be applied to the attached workpiece or the work accessory.

13. The machine table of claim 11 or 12, **characterized in that** said means comprise a groove structure (28), especially a T-shaped groove structure, which interacts with corresponding counterpieces which can be introduced into the groove structure and are formed at the workpiece or work accessory for holding the workpiece or work accessory.

14. The machine table of one of claims 11 to 13, **characterized in that** said means comprise longitudinally extending rails on which at least a carriage carrying the workpiece or the work accessory can be shifted.

15. The machine table of one of claims 11 to 14, **characterized in that** said means comprise a plurality of suction openings (26) which can be closed off by valve elements (27) and over which a vacuum can be applied to the workpiece or the work accessory which has been set down.

16. The machine table of one of claims 11 to 15, **characterized in that** said means comprises a magnetic plate, especially a plate, which can be magnetized by an electromagnet.

17. The machine table of one of claims 11 to 16, **characterized in that** said means comprises a metal plate (21) having a plurality of channel openings (29) opening at an upper side of said plate with assigned magnetic closing disks (30) with which a vacuum can be applied to the workpiece or the work accessory.

18. The machine table of one of claims 11 to 17, **characterized in that** said means comprises a wood or plastic plate into which nails, screws and other fastening elements can be introduced.

19. The machine table of one of claims 11 to 18, **characterized in that** said respective attachable element (18, 19, 20, 21) is panel-shaped and is fastened, preferably screwed by suitable fastening means (22) to the respective side of the table element (3, 9, 13).

20. The machine table of one of the preceding claims, **characterized in that** at least one vacuum channel (16) is preferably provided within the table element (3, 9, 13) by which vacuum is supplied to means provided on at least one side, with which vacuum can be supplied to the workpiece or work accessory.

21. The machine table of claim 20, **characterized in that** several channel boreholes (17), which communicate with the integrated vacuum channel (16) and of which at least a portion can be connected with corresponding channel boreholes (25, 26, 29) or grooves or with a vacuum cavity of the respective attachable elements (18, 19, 21), discharge at the respective side.

22. The machine table of claim 20 or 21, **characterized in that** underneath each side (I, II, III, IV) of the table element (3, 9, 13) at least one vacuum channel (16) is provided which discharges over channel boreholes (17) at the respective side (I, II, III, IV).

23. The machine table of one of claims 20 to 22, **characterized in that** a vacuum channel (16) assigned to one side can be connected with an external vacuum source (33) only in and automatically upon reaching the position in which the respective side is in its working position.

24. The machine table of one of the preceding claims, **characterized in that** one or more locking elements (36) are provided for locking the table element (3, 9, 13) in the respective position.

25. The machine table of claim 23 or 24, **characterized in that** at least one locking element (36) is constructed simultaneously as a connecting element between the vacuum channel (16) and the vacuum source (33), which can be connected to the locking element (36).

26. The machine table of one of the preceding claims, **characterized in that** at least one compressed air channel (41) is provided, which can be connected with an external source of compressed air (43) and is integrated in the table element (3, 9, 13) and discharges at least at one side.

27. The machine table of one of the preceding claims, **characterized in that** a plate (31) is arranged at one side of the table element (3, 9, 13), said plate closing the vacuum channels (16) and, if applicable, the one or a plurality of compressed air channels (41), at which suitable locking elements (32, 45, 47) are provided for connecting a vacuum channel (16) or a compressed air channel (41) with the respective source (33, 43) and/or a locking element (36).

28. The machine table of one of claims 11 to 26, **characterized in that** said table element (3, 9, 13) has a standardized basic support (15) including, if applicable, at least one integrated vacuum channel and/or channel for compressed air (16, 41), at the sides thereof the attachable elements (18, 19, 20, 21) can be mounted.

29. The machine table of one of the preceding claims, **characterized in that** the one or each in particular console-like table element (55, 60) consists of several table element sections (56, 57, 58, 59, 61, 62, 63) which are arranged in series and in each case have at least two sides which can be rotated separately about a common axis and can be mutually locked.

30. The machine table of claim 29, **characterized in that** said table element sections (55, 60) are rotatable manually or mechanically.

31. The machine table of claim 29 or 30, **characterized in that** each of said table element sections (56, 57, 58, 59, 61, 62, 63) has at least one vacuum channel and/or at least one compressed air channel, wherein at least the channels of two table element sections being arranged next to each other and in an upper working position can be coupled.

32. The machine table of claim 31, **characterized in that** the channels of two adjacent table element sections (56, 57, 58, 59, 61, 62, 63) which extend in the region of a side being not in the upper working position, can be coupled with one another.

33. The machine table of claim 31 or 32, **characterized in that** the coupling is accomplished automatically upon reaching a position in which the sides of two of said adjacent table element sections (56, 57, 58, 59, 61, 62, 63) are parallel to one another.

34. The machine table of one of claim 29 to 33, **characterized in that** at least one table element section (62) is removable from said combination.

35. The machine table of claim 34, **characterized in that** said table element sections (56, 57, 58, 59) being detachably positionable on a central support extending in the axis of rotation.

36. The machine table of claim 34, **characterized in that** the least one table element section (62) is removable completely from said combination such that a gap is formed between two table elements sections (61, 63) into which a third object can be inserted.

## Revendications

1. Table pour machine-outil destinée à une machine d'usinage permettant de recevoir au moins une pièce à usiner ou au moins un accessoire de travail, comportant au moins un élément de table (3, 9, 13) disposé de manière pivotante autour d'un axe, lequel présente au moins deux côtés pouvant être mis dans une position de travail en faisant tourner l'élément de table, sur lesquels peut être maintenue la pièce et/ou l'accessoire de travail, **caractérisée en ce que** l'élément de table (3, 9, 13) est configuré sous la forme d'une console, moyennant quoi, sur le châssis de table (2), sont prévus plusieurs éléments de table (3, 9, 13) de type console, disposés parallèlement les uns aux autres.

2. Table pour machine-outil selon la revendication 1, **caractérisée en ce que** l'élément de table est configuré sous la forme d'un plateau de table présentant une grande surface.

3. Table pour machine-outil selon l'une quelconque des revendications 1 ou 2, **caractérisée en ce que** chaque élément de table de type console (9) est configuré sensiblement de manière triangulaire en coupe et présente trois côtés (I, II, III).

4. Table pour machine-outil selon l'une quelconque des revendications 1 ou 2, **caractérisée en ce que** chaque élément de table de type console (3) est configuré sous une forme sensiblement rectangulaire en coupe et présente quatre côtés (I, II, III, IV).

5. Table pour machine-outil selon l'une quelconque des revendications précédentes, **caractérisée en ce que** les éléments de table (3, 9, 13) de type console peuvent être disposés de manière mobile sur le châssis de table (2).

6. Table pour machine-outil selon la revendication 5, **caractérisée en ce que** les éléments de table (3, 9, 13) peuvent être positionnés les uns à côté des autres, de telle sorte qu'on obtient une surface de table sensiblement plane, fermée.

7. Table pour machine-outil selon la revendication 6, **caractérisée en ce que** les éléments de table (3, 9, 13) peuvent être déplacés manuellement et/ou automatiquement, en particulier par moteur ou pneumatiquement.

8. Table pour machine-outil selon l'une quelconque des revendications précédentes, **caractérisée en ce que** le ou les éléments de table (3, 9, 13) peuvent être amenés à pivoter manuellement et/ou automatiquement, en particulier par moteur ou pneumatiquement.

9. Table pour machine-outil selon la revendication 8, **caractérisée en ce que** plusieurs éléments de table (3, 9, 13) peuvent pivoter conjointement à l'aide d'un entraînement commun par moteur ou pneumatique commun, ou séparément à l'aide d'entraînements par moteur ou pneumatiques (6) séparés.

10. Table pour machine-outil selon l'une quelconque des revendications précédentes, **caractérisée en ce que**, sur les côtés (I, II, III, IV), il est prévu des moyens ayant une action similaire et/ou différente, saisissant la pièce et/ou l'accessoire de travail ou agissant conjointement avec celle-ci/celui-ci afin de maintenir la pièce et/ou l'accessoire de travail.

11. Table pour machine-outil selon la revendication 10, **caractérisée en ce que** les moyens sont configurés directement sur le côté respectif ou intégrés à cet endroit, ou **en ce que**, sur le côté respectif, au moins un élément de positionnement (18, 19, 20, 21), présentant ou formant les moyens respectifs, est fixé ou peut être fixé.

12. Table pour machine-outil selon la revendication 11, **caractérisée en ce que** les moyens comportent une structure grilles-écrans (24) par l'intermédiaire de laquelle une dépression peut être appliquée à la pièce déposée ou à l'accessoire de travail.

13. Table pour machine-outil selon l'une quelconque des revendications 11 ou 12, **caractérisée en ce que** les moyens comportent une structure de rainures (28), en particulier des rainures en T, qui agissent conjointement avec les pendants correspondants pouvant être introduits dans celles-ci ou agencés sur la pièce ou sur l'accessoire de travail afin de les maintenir.

14. Table pour machine-outil selon l'une quelconque des revendications 11 à 13, **caractérisée en ce que** les moyens comportent des rails longitudinaux, sur lesquels peut se déplacer au moins un chariot portant la pièce et/ou l'accessoire de travail.

15. Table pour machine-outil selon l'une quelconque des revendications 11 à 14, **caractérisée en ce que** les moyens comportent une pluralité d'orifices d'aspiration (26) pouvant être fermés par l'intermédiaire d'éléments de soupape (27), par l'intermédiaire desquels une dépression peut être appliquée sur la pièce déposée ou sur l'accessoire de travail.

16. Table pour machine-outil selon l'une quelconque des revendications 11 à 15, **caractérisée en ce que** les moyens comportent une plaque magnétique, en particulier une plaque magnétique pouvant être aimantée par l'intermédiaire d'un électroaimant.

17. Table pour machine-outil selon l'une quelconque des revendications 11 à 16, **caractérisée en ce que** les moyens comportent une plaque métallique (21) avec une pluralité d'orifices de canaux (29) débouchant en haut, avec des disques obturateurs (30) magnétiques associés, par l'intermédiaire desquels une dépression peut être appliquée sur la pièce déposée ou sur l'accessoire de travail.

18. Table pour machine-outil selon l'une quelconque des revendications 11 à 17, **caractérisée en ce que** les moyens comportent une plaque en bois ou en plastique, dans laquelle peuvent être enfoncés des clous, des vis ou autres moyens de fixation.

19. Table pour machine-outil selon l'une quelconque des revendications 11 à 18, **caractérisée en ce que** l'élément de positionnement respectif (18, 19, 20, 21) est configuré sous la forme de plaque et peut être fixé, en particulier vissé par l'intermédiaire de moyens de fixation (22) appropriés sur le côté respectif de l'élément de table (3, 9, 13).

20. Table pour machine-outil selon l'une quelconque des revendications précédentes, **caractérisée en ce que**, à l'intérieur de l'élément de table (3, 9, 13), au moins un canal de dépression (16) est prévu, par l'intermédiaire duquel on peut alimenter en dépression, sur au moins un côté, les moyens permettant d'appliquer la dépression à la pièce et/ou l'accessoire de travail.

21. Table de travail selon la revendication 20, **caractérisée en ce que**, sur le côté respectif, débouchent plusieurs ouvertures de canaux (17) communiquant avec le canal de dépression (16) intégré, parmi lesquels au moins une partie peut être reliée aux ouvertures ou rainures de canaux (25, 26, 29) correspondants, ou à une cavité de dépression de l'élément de positionnement (18, 19, 21) respectif.

22. Table pour machine-outil selon l'une quelconque des revendications 20 ou 21, **caractérisée en ce que**, en dessous de chaque côté (I, II, III, IV) de l'élément de table (3, 9, 13) il est prévu au moins un canal de dépression (16) qui débouche sur le côté respectif (I, II, III, IV) par l'intermédiaire d'ouvertures de canaux (17).

23. Table pour machine-outil selon l'une quelconque des revendications 20 à 22, **caractérisée en ce qu'**un canal de dépression (16) affecté à un côté ne peut être relié à la source de dépression (33) externe automatiquement que lorsqu'on atteint la position dans laquelle le côté respectif se trouve dans sa position de travail.

24. Table pour machine-outil selon l'une quelconque des revendications précédentes, **caractérisée en ce qu'**un ou plusieurs éléments de blocage (36) sont prévus afin de bloquer l'élément de table (3, 9, 13) dans la position de travail respective.

25. Table pour machine-outil selon l'une quelconque des revendications 23 et 24, **caractérisée en ce qu'**au moins un élément de blocage (36) est configuré parallèlement comme élément de liaison entre le canal de dépression (16) et la source de dépression (33) pouvant être raccordée à l'élément de blocage (36).

26. Table pour machine-outil selon l'une quelconque des revendications précédentes, **caractérisée en ce qu'**il est prévu au moins un canal d'air comprimé (41) intégré dans l'élément de table (3, 9, 13) et débouchant au moins d'un côté, lequel peut être relié à une source d'air comprimé externe (43).

27. Table pour machine-outil selon l'une quelconque des revendications précédentes, **caractérisée en ce que**, sur un côté frontal de l'élément de table (3, 9, 13), il est prévu une plaque (31) fermant le ou les canaux de dépression (16) et le cas échéant le ou les canaux d'air comprimé (41), sur laquelle sont prévus les moyens de liaison (32, 45, 47) appropriés pour relier un canal de dépression (16) ou un canal d'air comprimé (41) à la source respective (33, 43) et/ou à un élément de blocage (36).

28. Table pour machine-outil selon l'une quelconque des revendications 11 à 26, **caractérisée en ce que** l'élément de table (3, 9, 13) présente un support principal (15) standard doté le cas échéant d'un ou plusieurs canaux de dépression et/ou d'air comprimé (16, 41) intégrés, sur un côté desquels peuvent être fixés les éléments de positionnement (18, 19, 20, 21).

29. Table pour machine-outil selon l'une quelconque des revendications précédentes, **caractérisée en ce que** le ou chaque élément de table (55, 60) en particulier de type de console est constitué de plusieurs sections d'éléments de table (56, 57, 58, 59, 61, 62, 63) disposées les unes derrière les autres, présentant respectivement au moins deux côtés, qui peuvent tourner séparément autour d'un axe commun (C) et peuvent être bloqués mutuellement.

30. Table pour machine-outil selon la revendication 29, **caractérisée en ce que** les sections d'éléments de table (55, 60) peuvent être amenées à pivoter manuellement et/ou mécaniquement.

31. Table pour machine-outil selon l'une quelconque des revendications 29 ou 30, **caractérisée en ce que** chaque section d'élément de table (56, 57, 58, 59, 61, 62, 63) présente au moins un canal de dépression et/ou au moins un canal d'air comprimé, moyennant quoi au moins les canaux de deux sections d'éléments de table disposées l'une à côté de l'autre, qui se trouvent dans la position de travail supérieure, peuvent être accouplées les unes aux autres.

32. Table pour machine-outil selon la revendication 31, **caractérisée en ce que** les canaux de deux sections d'éléments de table (56, 57, 58, 59, 61, 62, 63) disposées l'une à côté de l'autre, qui s'étendent dans la zone d'un côté qui ne se trouve pas dans la position de travail, supérieure, peuvent être accouplées.

33. Table pour machine-outil selon l'une quelconque des revendications 31 ou 32, **caractérisée en ce que** l'accouplement se produit automatiquement lorsqu'on atteint une position dans laquelle les côtés de deux sections d'éléments de table (56, 57, 58, 59, 61, 62, 63) sont parallèles.

34. Table pour machine-outil selon l'une quelconque des revendications 29 à 33, **caractérisée en ce qu'**au moins une section d'élément de table (62) peut être retirée de l'assemblage.

35. Table pour machine-outil selon la revendication 34, **caractérisée en ce que** les sections d'éléments de table (56, 57, 58, 59) peuvent être déposées de manière amovible sur un support s'étendant de manière centralisée dans l'axe de rotation.

36. Table pour machine-outil selon la revendication 34, **caractérisée en ce que** la au moins une section d'élément de table (62) peut être retirée complètement de l'assemblage, de telle sorte qu'il apparaît entre les deux sections d'éléments de table (61, 63) une brèche dans laquelle peut être inséré un troisième article.
